# EUROPEAN PATENT APPLICATION

(11) **EP 4 361 688 A1**
(43) Date of publication of application: **01.05.2024**
(21) Application number: 22203476.1
(22) Date of filing: 25.10.2022
(51) Int. Cl.: G02B 6/02

(54) **END-CAP ASSEMBLY FOR A HOLLOW CORE OPTICAL FIBER**

(71) Applicant: NKT Photonics A/S, 3460 Birkerød (DK)
(72) Inventor: ROSIEWICZ, Alex, Boston, MA 02210 (US); CRUZ, David, Boston, MA 02210 (US); CHIEFFO, Logan, Boston, MA 02210 (US)
(74) Representative: Zacco Denmark A/S

(57) **Abstract**

Disclosed is an end-cap assembly for a hollow core optical fiber, comprising: an elongated and hollow glass ferrule comprising: a first ferrule-part with a first ferrule-end, and a second ferrule-part with a second ferrule-end, wherein the first ferrule-end is configured to be sealed, and wherein the second ferrule-end is configured to receive a hollow core optical fiber, and wherein the second ferrule-part is configured to fix the hollow core optical fiber.

## Description

### Field of the invention

The present disclosure relates generally to an end-cap assembly for a hollow core optical fiber. More specifically, the present disclosure relates to an end-cap assembly comprising a ferrule and an end-cap, and how to seal the ferrule, in particular such that the ferrule is hermetically sealed, and more particular such that a high power optical beam can be coupled into and/or out of the hollow core optical fiber without damaging the hollow core optical fiber.

### Background

End-cap assemblies are known in the field of high-power laser applications, particularly in applications where a high-power optical beam is coupled into a hollow core optical fiber, simply called a hollow core fiber (HCF).

The reason why the high-power optical beam is desired to be coupled into a HCF is because such a fiber confines almost all the energy in the hollow-core, and therefore seems like free-space transmission. Further, since the energy is confined in the hollow-core, guidance through a HCF improves the damage threshold and weakens non-linear effects.

The reason why an end-cap is desired to be used in combination with a HCF is because an end-cap protects the fiber-end from being contaminated. By protecting the fiber-end, the HCF does not get contaminants into the air-filled inner channels by capillary forces, and therefore performs at its optimum. Further, an end-cap may play a role in fixing the HCF.

Recently, end-caps for a HCF has been demonstrated in the journal article "All-Fiber Gas Cavity Based on Anti-Resonant Hollow-Core Fibers Fabricated by Splicing with End Caps", by Jing Shi et al, in Photonics 2021, 8, 371. The end-caps as demonstrated were both used for in-coupling to and out-coupling from the hollow core optical fiber. Each of end-caps were made from silica in the form of a monolithic unit, where each end-cap is directly spliced to the HCF. In the article, it was demonstrated that the HCF with two end-caps could be used with a laser having a maximum input power at 1080 nm of about 260 W, and provide an output power of 203 W, yielding a total transmission efficiency of 78.1%.

More recently, the two end-caps, as described above, were spliced more optimally, but still directly, to the HCF, as described in the article "Stable and Efficient Coupling of High-Power Continuous-Wave Laser With Uncooled Anti-resonant Hollow-Core Fibers With End Caps", by Yulong Cui, et al, in IEEE Photonics Journal, Vol. 14, No. 1, February 2022. The more optimal splicing lead to a stable laser output for more than 1 hour, still yielding a high transmission efficiency of 77.5% even at input power of 460 W.

Most recently, Yulong Cui et al. described in "Highly efficient and stable coupling of kilowatt-level continuous wave laser into hollow-core fibers," Chin. Opt. Lett. 20 (2022), that the end-cap, also directly spliced to a HCF, but now with even more optimal splicing, could provide a stable laser output for more than 1 hour, but now with a transmission efficiency of around 87.5%, and at an input power of 1176 W.

The above-described journal articles provide end-caps, which are directly spliced to the HCF. This is problematic. Due to the splicing process, the microstructures of the HCF are damaged, and will lead to collapse of the cladding. This may limit the coupling efficiency, which will provide that excess heat is generated when in use with a high-power laser, and thus burn the fiber. This needs to be avoided and was also the reason why the splicing was incrementally improved in the articles - particularly by carefully controlling the temperature of the splicing system. However, as also described in the articles, a stable laser output was only able to be provided for about an hour.

There is thus a need for providing an end-cap, or an end-cap assembly, that provides stable and efficient coupling without damaging the microstructures of the HCF, and provides a high transmission efficiency, particularly such that a stable laser output for a high power laser can be provided for a long time.

A solution for an end-cap assembly for a hollow-core optical fiber is disclosed in US 2007/0041083. Here, the end-cap assembly comprises a glass ferrule tube that is laser-welded at one end to the output end of the HCF and the other end to an output window or an input lens. The output window or the input-end is similar to an end-cap, and in this manner, the end-cap is not directly fixed or laser-welded to the HCF. Accordingly, US 2007/0041083 provides an end-cap assembly, where the fiber-end is not compromised. However, by laser-welding the output window or the input lens to the glass ferrule tube, it is very likely that the input surface or the output surface is damaged during manufacturing, which could decrease transmission through the end cap and result in failure of the assembly.

Accordingly, there is a desire to provide an end-cap assembly that can be manufactured without damaging the optical surfaces for input and/or output, such that transmission is optimized. At the same time, there is also a desire to provide an end-cap assembly that provides a stable and efficient coupling without damaging the microstructures of the HCF.

### Summary

It is an objective of this disclosure to provide an end-cap assembly that overcomes the problems of the prior art.

Further, it is an objective of this disclosure to provide an end-cap assembly with high transmission efficiency.

Even further, it is an objective of this disclosure to provide an end-cap assembly that provides a stable and efficient coupling into and out of the HCF without damaging the microstructures of the HCF.

These and other objectives have been solved by the end-cap assembly as defined in the claims and as described below in the present disclosure.

In one aspect there is disclosed an end-cap assembly for a hollow core optical fiber, comprising: an elongated and hollow glass ferrule comprising:
∘ a first ferrule-part with a first ferrule-end,
∘ and a second ferrule-part with a second ferrule-end,

wherein the first ferrule-end is configured to be sealed, and
wherein the second ferrule-end is configured to receive a hollow core optical fiber, and
wherein the second ferrule-part is configured to fix the hollow core optical fiber.

In a preferred embodiment of the first aspect, the end-cap assembly further comprises an elongated and solid end-cap made of an optically transmissive material comprising:
∘ a first end-cap-part with a first end-cap-end, and
∘ a second end-cap-part with a second end-cap-end,
wherein the second end-cap-part is attached inside the first ferrule-part, whereby the end-cap seals the first ferrule-end.

This preferred embodiment provides several advantages.

The elongated and solid end-cap may first of all serve to protect the hollow core optical fiber from contaminants, since the hollow core optical fiber is to be placed and fixed inside the ferrule.

Secondly, the elongated and solid end-cap may serve to distance the first end-cap-part and the first end-cap-end from the second end-cap part. Accordingly, when the second end-cap-part is placed inside the first ferrule-part, then the second end-cap part can be fixed inside the first ferrule-part in a manner where the first end-cap-end, forming an optical surface, is not close to where the second end-cap part is fixed. In this manner, it is at least physically ensured that the optical surface is not easily damaged in the process of fixing the end-cap to the ferrule.

Thirdly, the elongated and solid end-cap may serve to provide stability of the solid end-cap inside the ferrule, whereby the end-cap may be fixed in a stable and/or a uniform manner.

By the advantages as described above, the present disclosure, and in particular the elongated and solid end-cap, provides an end-cap assembly that is configured to provide a stable and efficient coupling of an optical beam in and out of the HCF without damaging the microstructures of the HCF.

Further, since the second ferrule-end is configured to receive a hollow core optical fiber, the second ferrule-end may in some embodiments be sealed by the hollow core optical fiber. In such embodiments, there is provided a sealed ferrule ensuring that no contaminants are able to reach the fiber.

In another aspect, the present disclosure provides an end-cap-to-fiber assembly comprising: the end-cap assembly according to the first aspect, the hollow core optical fiber comprising a cladding, wherein said fiber comprises:
a first fiber-part having a fiber input-end or a fiber output-end, and a second fiber-part having a fiber output-end or a fiber input-end, wherein the first fiber-part is fixed inside the second ferrule-part, whereby said fiber is physically separated from said end-cap, and wherein the second part is outside the second ferrule-part.

Accordingly, when the end-cap assembly is used with a HCF, the present disclosure, and in particular the elongated and solid end-cap, provides an end-cap assembly that is configured to provide a stable and efficient coupling of an optical beam in and out of the HCF without damaging the microstructures of the HCF.

In a third aspect, the present disclosure provides system for coupling an optical beam into and/or out from a hollow core optical fiber, comprising:
- the end-cap-to-fiber assembly according to the second aspect;
- a laser configured to generate the optical beam.

In a preferred embodiment, the optical beam is directed into the first end-cap-end and into to the fiber input-end, whereby the optical beam is coupled into the hollow core optical fiber, and/or wherein the optical beam is directed out from the first end-cap-end and out from the fiber output-end, whereby the optical beam is coupled out from the hollow core optical fiber.

In a fourth aspect, the present disclosure provides a method for manufacturing an end-cap assembly for a hollow core optical fiber, comprising the steps of:
- providing an elongated and hollow glass ferrule comprising:
   ∘ a first ferrule-part with a first ferrule-end, and
   ∘ a second ferrule-part with a second ferrule-end,
- providing an elongated and solid end-cap made of an optically transmissive material comprising:
   ∘ a first end-cap-part with a first end-cap-end, and
   ∘ a second end-cap-part with a second end-cap-end; and
- inserting and attaching the second end-cap part inside the first ferrule-part.

In a fifth aspect, the present disclosure provides a method for manufacturing an end-cap-to-fiber assembly for a hollow core optical fiber, comprising the steps of:
- manufacturing the end-cap assembly according to the first aspect;
   providing a hollow core optical fiber comprising:
   ∘ a first fiber-part having a fiber input-end, and
   ∘ a second fiber-part having a fiber output-end; and
- inserting and attaching the first fiber-part inside the second ferrule-part.

### Brief description of the drawings

The above and/or additional objects, features and advantages of the present disclosure, will be further described by the following illustrative and non-limiting detailed description of embodiments of the present disclosure, with reference to the appended drawing(s), wherein:
**Fig. 1** shows an embodiment of the end-cap assembly and the end-cap-to-fiber assembly according to the first aspect and the second aspect, respectively.
**Fig. 2** shows an embodiment of the ferrule, without the end-cap, as part of the first aspect and the second aspect.
**Fig. 3** shows an embodiment of the end-cap assembly and the end-cap-to-fiber assembly according to the first aspect and the second aspect, respectively
**Fig. 4** shows an embodiment of the system for coupling an optical beam into and/or out from a hollow core optical fiber according to the third aspect.

### Detailed description

### First aspect: An end-cap assembly for a hollow core optical fiber

### Arc-fusion

In a preferred embodiment, the second end-cap-part is attached to the first ferrule-part by arc-fusion, preferably by uniformly creating a fuse around the second end-cap-part, and/or wherein the hollow core optical fiber is attached to the second ferrule-part by arc-fusion, preferably by uniformly creating a fuse around the hollow core optical fiber.

Arc-fusion or arc-fusion splicing is an established method for joining optical fibers. However, arc-fusion is commonly used in communication networks, ensuring splice loss down to 0.05 dB and excellent reliability. The inventors of the present disclosure have found that arc-fusion can be used as part of manufacturing an end-cap assembly for a hollow core optical fiber.

The typical advantage of using arc-fusion is gas-tight sealing a length of the hollow core fiber(s), which is of importance in making gas-filled absorption cells or protecting the fiber against penetration of humidity, dust or vapors in hostile operating environments.

When arc-fusion is used in combination with a hollow core optical fiber and the ferrule, as here disclosed, the inventors have found that it provides a gas-tight sealing, or hermetic sealing, of the ferrule. Accordingly, and because the fiber is configured to be inside the ferrule, the inventors have found a very effective method to protect the fiber from the environment.

In a most preferred embodiment, the arc-fusion is performed using a multi-electrode system as described in WO 2008/098119, which is configured to generate arcs between electrodes to produce a substantially uniform heated field about an outer surface of at least one optical fiber. The inventors of the present disclosure have found that such a multi-electrode system may in the most preferred embodiments be adapted to produce a substantially uniform heated field about an outer surface of the ferrule as described in the present disclosure. In other words, since the end-cap and the hollow core optical fiber is inside the ferrule, the substantially uniform heated field is, in the most preferred embodiment, about an outer surface of the end-cap, and the substantially uniform heated field is about an outer surface of the hollow core optical fiber.

By having the end cap and/or the hollow core fiber inserted into the ferrule, the arc field may be used to melt the ferrule, for example if the ferrule is made of glass. In this manner, the glass may be melted around outer surface of the elongated section to form a fuse between the ferrule and the end cap, and/or between the ferrule and the hollow core optical fiber. Such a process has several advantages.

Firstly, it serves to keep the arc field away from the face of the end cap. It is beneficial to keep the arc field away from the end of the end cap as excessive heat to that surface has the potential to cause damage to the surface which would decrease transmission through the end cap and result in failure of the assembly.

Secondly, since the end-cap is inside the ferrule, rather than outside the ferrule, a compact assembly is provided. Compactness provides stability to the arc field during the fusion process. This is because the radial location of the electrodes influences the stability of the arc field. Particularly, when the radial location of the electrodes is far away from the center of the arc field, the stability of the arc field around the end-cap reduces and produces uneven heating around the assembly.

As described above, using arc-fusion, may provide that a fuse is formed between the ferrule and the end cap, and/or between the ferrule and the hollow core optical fiber. Accordingly, by inspection of the ferrule after arc-fusion, it may be possible to characterize that the ferrule has been sealed by arc-fusion, for example because the fuse may be uniform.

The arc-fusion may optimally be performed when the arcs are plasma arcs, and the heated field is a heated plasma field. Further, the arc-fusion may be performed when the substantially uniform heated field generates a ferrule surface temperature of at least about 1600 °C since this may provide a thermally stabilized plasma. The thermally stabilized plasma may provide that the fusion process is more than ten times more thermally repeatable as compared to other arc-fusion processes.

### Dimensions of the end-cap

In one embodiment, the second end-cap-part has a length of more than 1 mm, preferably around 2 mm. Such a length has the advantage that when inserted into the ferrule, it provides an assembly, where the end-cap is prevented from moving from side to side inside the ferrule, thus providing a stable and well-defined alignment of the end-cap inside the ferrule.

In another embodiment, the first end-cap part is outside said ferrule, and wherein the first end-cap-part has a length of more than 2 mm, preferably around 3 mm. This has the advantage that when the end-cap is attached inside the ferrule, for example by arc-fusion, the length of the first end-cap part provides for a stable fixture inside an arc-fusion system.

In a preferred embodiment, the first end-cap-part is cylindrical and has a first outer diameter of more than 1 mm, preferably around 2 mm. Having such a first end-cap-part provides firstly that a relatively large optical beam may be transmitted into the first end-cap-part, such that the large optical beam may further be transmitted into the ferrule and further into the hollow core optical fiber. Secondly, by having the first end-cap-part with the first outer diameter of more than 1 mm, the end-cap may be able to fit into an arc-fusion system that is configured to hold an optical fiber, such that the arc-fusion system can then hold the first end-cap-part.

In another preferred embodiment, the second end-cap-part is cylindrical and has a second outer diameter of less than 2 mm, preferably around 1 mm. Having such a second end-cap-part provides firstly that a relatively large optical beam may be transmitted out from the second end-cap-part, such that the large optical beam may further be transmitted into the ferrule and further into the hollow core optical fiber. Secondly, by having the second end-cap-part with the second outer diameter of less than 2 mm, the second end-cap-part may be able to fit inside the ferrule, thereby providing a compact assembly. As described in relation to arc-fusion, compactness may provide stability to the arc field during a fusion process if such is used.

In yet another preferred embodiment, the second end-cap-part is cylindrical and has a second outer diameter of more than 0.4 mm, preferably around 1 mm. By having the second end-cap-part with the second outer diameter of more than 0.4 mm, and/or less than 2 mm, the second end-cap-part may be able to fit inside the ferrule, thereby providing a compact assembly. As described in relation to arc-fusion, compactness may provide stability to the arc field during a fusion process if such is used.

In a more preferred embodiment, the first end-cap-part is cylindrical and has a first outer diameter, and wherein the second end-cap-part is cylindrical and has a second outer diameter, wherein the first outer diameter is larger than the second outer diameter. This embodiment provides that the first end-cap-part may be matched to an optical input requirement, such as a lens or optical beam dimension, and that the second end-cap-part may be matched to another optical input requirement for the hollow core optical fiber, such as the fiber dimension.

In relation to the above-described embodiment, said end-cap may further comprises a mid-end-cap-part between the first end-cap-part and the second end-cap-part, wherein the mid-end-cap-part is tapered from the first outer diameter to the second outer diameter. This may provide a method for a low-cost production of the end-cap.

In a most preferred embodiment, the dimensions of the second end-cap-part is configured to match the dimensions of the first ferrule-part. By such a match, any angular and concentricity misalignment of the fiber during a fusing process may be minimized.

### Other features of the end-cap

In one embodiment, said end-cap is made of fused silica, for example Corning 7979 Grade 0F. In this manner, the end-cap may be made from the same material as the hollow core optical fiber.

In another embodiment, the first end-cap-end and/or the second end-cap-end is/are anti-reflective (AR) coated, preferably by a dielectric coating, for example comprising multiple layers, or multiple-material thin-film stacks.

In an alternative embodiment to the one described above, the first end-cap-end and/or the second end-cap-end is/are anti-reflective (AR) treated, preferably by a random pattern process. An example of treating the first end-cap-end and/or the second end-cap-end is/are is by etching a nanometer-scale texture directly into the surface(s). These nanotextures have exhibited high efficiency, wide bandwidths, wide acceptance angles, and unique functionality. Surface-energy effects, such as hydrophobicity and a resistance to the adsorption of chemicals from the lasing environment, are also potential benefits of nanostructure technology. Fabricating surface-relief structures in optical materials produces a gradual transition in the material density (refractive index) encountered by light passing through. The height, shape, and spacing of the structures that make up the texture determine how efficient the texture is at suppressing reflected light. Because of this gradient-index AR effect, the AR performance is very stable and does not depend on the wavelength of the light as is the case for dielectric coating. As a result, AR nanotextures exhibit wide operational bandwidths, extremely low losses, and wide acceptance angles compared to AR coatings.

When the first end-cap-end and/or the second end-cap-end is/are anti-reflective (AR) coated or treated as described above, the first-end-cap-end and/or the second end-cap-end is/are rather delicate and may not withstand all kinds of treatments in order to preserve its AR effect. Thus, when the end-cap is attached inside the ferrule, according to the present disclosure, and if the end-cap is attached after the end-cap-end has been AR-coated or AR-treated, then the first end-cap-end and/or the second end-cap-end may in a preferred embodiment be protected from side-effects due to an attachment process. As previously described, such an attachment process may be arc-fusion. If arc-fusion is performed close to the end-cap-end(s) having an AR-coating or AR-treatment, then the arc-fusion could potentially damage the AR-coating or the AR-treatment. By having the end-cap elongated, according to the presently disclosed assembly, it is ensured that the end-cap-end(s) is/are physically removed from the arc-fusion, whereby the AR-coating or the AR-treatment is prevented from being damaged. In this manner, the elongated end-cap together with the end-cap-end(s) being AR-coated or AR-treated has the technical effect of preventing the AR-coating or AR-treatment from being damaged during arc-fusion. Accordingly, in a preferred embodiment, there is provided an end-cap assembly for a hollow core optical fiber, comprising:
- an elongated and hollow glass ferrule comprising:
   ∘ a first ferrule-part with a first ferrule-end,
   ∘ and a second ferrule-part with a second ferrule-end,

   wherein the first ferrule-end is configured to be sealed, and
   wherein the second ferrule-end is configured to receive a hollow core optical fiber, and
   wherein the second ferrule-part is configured to fix the hollow core optical fiber; and
- an elongated and solid end-cap made of an optically transmissive material comprising:
   ∘ a first end-cap-part with a first end-cap-end, and
   ∘ a second end-cap-part with a second end-cap-end,

   wherein the second end-cap-part is attached inside the first ferrule-part, whereby the end-cap seals the first ferrule-end,
   wherein the second end-cap-part is attached to the first ferrule-end by arc-fusion, and
   wherein the first end-cap-end and/or the second end-cap-end is/are anti-reflective treated.

In this preferred embodiment, and the other embodiments, according to the first aspect, arc-fusion is performed on the second end-cap-part and thus also on the first ferrule-part. To protect the first end-cap-end and/or the second end-cap-end from being damaged during arc-fusion, the inventors of the present disclosure have found that the first-end-cap-end and/or the second end-cap-end must be separated by more than 0.5 mm, preferably separated by more than 1 mm, from the arc-fusion points at the second end-cap-part and the at the first ferrule-part. This may for example be achieved when the end-cap has a total length of more than 2 mm, more preferably when the end-cap has a total length of more than 3 mm, such as around 4 mm or 5 mm.

In one embodiment, the first end-cap-end is a flat surface. A flat surface may work as an optical window, allowing for an optical beam to diverge into the optical window and further into the end-cap. The optical beam may for example diverge by placing a lens in front of the first end-cap-end. Alternatively, in another embodiment, the first end-cap-end is a curved surface to form a lens with a focal point inside the second ferrule-part. This may provide a compact assembly.

### The ferrule

Typically, a ferrule is a ceramic, plastic or a stainless steel part of a fiber-optic plug that holds the end of the fiber and precisely aligns it to the socket. The fiber is inserted into the ferrule and cemented with an epoxy or adhesive, which gives it long-term mechanical strength and prevents contamination from the environment. The ferrule as disclosed in the present disclosure is different from the typical ferrule as just described.

In one embodiment, said ferrule is made of a material that is different from fused silica, and wherein the material has a refractive index defined at a wavelength of 1064 nm and a temperature of 20 degrees Celsius) that is lower than that of fused silica. In this manner, the ferrule may be made from a material that differs from the end-cap and/or the hollow core optical fiber. Specific examples of materials and their advantages are described in the following.

In another embodiment, said ferrule is made of a material that is different from fused silica, and wherein the material has a coefficient of thermal expansion (CTE) that differs by a factor of 0.3 or more and less than 8.0 than that of fused silica, preferably where the factor is in the range from around 0.5-6.0, more preferably where the factor is in the range from around 0.5-1.5.

In a preferred embodiment, the material is Borosilicate. This material is an example of a material that has a CTE of around 6 times or more than that of fused silica. Borosilicate has a refractive index that is higher than that of fused silica, namely 1.47 rather than 1.44 at the wavelength of 1064 nm. The inventors of the present disclosure have found that if the ferrule is made of Borosilicate, its very low working/softening temperature may minimize thermal load and damage to HC fiber.

In a most preferred embodiment, the material is Fluorine doped fused Silica (Fluorosilicate). This material is example of a material that has a CTE of around 0.5 than that of fused silica, but also its refractive index is lower than that of fused silica, namely 1.44 rather than 1.45 at the wavelength of 1064 nm. When considering arc-fusion of the hollow core optical fiber to the end-cap, the inventors of the present disclosure have found that fluorine doped fused silica has a low softening temperature, but not as low as Borosilicate, and therefore does not minimize thermal load to the fiber as much as Borosilicate. However, the inventors of the present disclosure have realized that Fluorine doped fused silica provides a great advantage over Borosilicate. Since fluorine doped fused silica has a coefficient of thermal expansion (CTE) that closely matches that of the fiber (such as made of fused silica), the inventors of the present disclosure have found that it does not induce stress at interfaces between the fiber and the ferrule, which could weaken the assembly at fuse points. For this reason, Fluorine doped fused Silica has been found to be more preferred than Borosilicate.

In some embodiments, the material is the same as that of the of the hollow core optical fiber, i.e. fused silica. In this manner, the CTE is clearly matched to the HC fiber and would not cause stress at the interface between the fiber and the ferrule. However, fused silica has a high working/softening temperature, so if fused silica is used it may cause damage to the structure of the hollow core optical fiber during a fusion process. Damage may however be prevented by different solutions.

In one embodiment, the first ferrule-part has a length of more than 1 mm, preferably around 2 mm. Such a length has the advantage that when the end-cap is inserted into the ferrule, it provides an assembly, where the end-cap is prevented from moving from side to side inside the ferrule, thus providing a stable and well-defined alignment of the end-cap inside the ferrule.

In another embodiment, the second ferrule-part has a length of more than 3 mm, preferably around 4 mm, more preferably around 5 mm. Such a length has the advantage that when the hollow core optical fiber is inserted into the ferrule, it provides an assembly, where the hollow core optical fiber is prevented from moving from side to side inside the ferrule, thus providing a stable and well-defined alignment of the fiber inside the ferrule. As previously described, a ferrule is in general an alignment system, and providing the length as here described is one solution to provide alignment of the fiber.

In yet another embodiment, the first ferrule-part is cylindrical and has a first inner diameter of more than 0.4 mm and/or less than 2 mm, preferably less than 1 mm. By this embodiment, a compact assembly is provided. As described in relation to arc-fusion, compactness may provide stability to the arc field during a fusion process if such is used.

In a preferred embodiment, the second ferrule-part is cylindrical and has a second inner diameter of more than 0.2 mm and/or less than 0.4 mm, preferably less than 0.3 mm, most preferably around 0.2 mm. This second inner diameter is preferably matched to dimensions of the hollow core optical fiber.

In some embodiments, the first ferrule-part is cylindrical inside and has a first inner diameter, and wherein the second end-cap-part is cylindrical inside and has a second inner diameter, wherein the first inner diameter is larger than the second inner diameter. This may provide that the ferrule matches the dimensions of both the end-cap and the hollow core optical fiber.

In other embodiments, said ferrule further comprises a mid-end-ferrule-part between the first ferrule-part and the second ferrule-part, wherein the mid-ferrule-part is tapered from the first inner diameter to the second inner diameter. This may provide a method for a low-cost production of the ferrule, for example if the inner diameter of the mid-ferrule-part is proportional to an outer diameter of the mid-ferrule-part, where the mid-ferrule-part is tapered from a first outer diameter to a second outer diameter.

In a preferred embodiment, the dimensions of the first ferrule-part are configured to match the dimensions of the second end-cap-part. In another preferred embodiment, the dimensions of the second ferrule-part are configured to match the dimensions of the hollow core optical fiber. Preferably, the match of the dimensions should be such that the difference between the first ferrule-part with its first inner diameter and the second end-cap-part with its second outer diameter, and/or the difference between the second ferrule part with its first inner diameter and the hollow core optical fiber with its outer diameter is less than 50 microns, most preferably between 5 and 15 microns. In these preferred embodiments, any movement during a fusion process may be minimized, which may provide for the most optimal and/or most uniform fuse.

### Applications of the end-cap assembly

In one embodiment, the end-cap assembly is for coupling an optical beam into the hollow core optical fiber, and wherein the first end-cap-end is configured to receive an optical beam, such that when the optical beam is incident on the first end-cap-end, the optical beam is transmitted through said end-cap and into the second ferrule-part.

In another embodiment, the end-cap assembly is for coupling an optical beam out of the hollow core optical fiber, and wherein the first end-cap-end is configured to transmit an optical beam, such that when the optical beam is transmitted from the first end-cap-end, the optical beam is transmitted through said end-cap via the ferrule.

In other words, the end-cap assembly may be used at one end of a hollow core optical fiber, as an input or an output, or the end-cap assembly may be used at both ends of a hollow core optical fiber, as both an input and an output. The end-cap assembly according to the present disclosure may be used for different applications and with a laser beam having a desired wavelength.

In some embodiments, the wavelength may be around 1 micron, or from around 1 micron to around 2 microns, such as to around 2.2 microns. For example, the wavelength may be from 1500-1600 nm, or from 1700-2200 nm.

This desired wavelengths as described above may for example be provided by a laser that operates as a continuous wave (CW) laser, or as an ultrashort pulse laser (USPL). The laser may also operate a long pulse laser, for example configured to deliver pulses from around 1 ns to several 100s of ns.

The laser may for example be a high-power (i.e. hundreds of Watts). It has been found that the end-cap assembly according to the present disclosure is able to be used in high-power applications, where a high-power laser is used.

However, the end-cap assembly according to the present disclosure is also able to be used in low-power applications, where a low-power laser is used. A low-power laser may be defined as a laser configured to provide milliwatts or tens of Watts.

When the end-cap assembly is used in low-power applications, the desired wavelength may be such as between 300 nm and 1000 nm. Such wavelengths may for example be used in relation to quantum setups.

### Second aspect: An end-cap-to-fiber assembly

In one embodiment, the first fiber-part is fixed by arc-fusion, preferably by uniformly creating a fuse around the hollow core optical fiber. The advantage of this embodiment has already been described in relation to the first aspect of the present disclosure.

In another embodiment, said fiber further comprises a mid fiber-part between the first fiber-part and the second fiber-part, wherein the mid fiber-part is stripped from the cladding.

Preferably, the mid fiber-part is outside the second ferrule-part, whereby the mid-fiber-part is configured to guide light out of said fiber. This may ensure that eventual cladding modes inside the cladding are removed from the fiber. The removed cladding modes are converted into the heat and may be removed from the fiber.

### Third aspect: A system for coupling an optical beam into and/or out from a hollow core optical fiber

In one embodiment, the laser is a high-power laser having an average power of more than 200 W, preferably more than 1000 W, more preferably more than 1500 W, most preferably more than 2000 W. Such high powers are typically not operable with prior end-cap products due to damages on the end-caps. Damages to prior end-cap products, particularly on input surfaces or coupling surfaces to the fiber, typical occur during fixation of the end-cap, because the end-caps are cemented directly to the fiber using for example by epoxy or adhesive, so the epoxy or adhesive sticks to the input and/or coupling surfaces. However, damages to prior end-caps products, particularly on input surfaces or coupling surfaces to the fiber, may also occur because the end-caps are welded. The inventors of the present disclosure have found that the assembly, as presently disclosed, is configured to operate for a long time with the input average power as here described. This is particularly because the end-cap is not directly fused to the hollow core optical fiber, but it is also because the elongated end-cap provides that the end-cap, in particular the first end-cap-end, is not damaged in the process of fixing the end-cap to the ferrule, whereby heat is not accumulated at the input-end of the hollow core optical fiber. Accordingly, the presently disclosed system overcomes these problems and ensures that the fiber is not burned when using a high-power laser. For the same reason, a transmission efficiency in the presently disclosed system, is achieved to be more than 85%, at least for average input power of up to 270 W.

### Fourth aspect: A method for manufacturing an end-cap assembly for a hollow core optical fiber

In one embodiment of the method according to the fourth aspect, the step of attaching the second end-cap part is performed by arc-fusion, preferably by uniformly creating a fuse around the second end-cap-part. The advantages of arc-fusion have already been described in relation to the first and second aspect of the present disclosure. Further, also as previously described, the first end-cap-end and/or the second end-cap-end may be AR-coated or AR-treated.

In relation to the method for manufacturing, the AR-coating or the AR-treatment may in an embodiment be applied or performed, respectively, before the end-cap is attached by arc-fusion inside the ferrule. This may ease the production of the end-cap-assembly, in particular because AR-coating or AR-treatment may be difficult on the second end-cap-end after arc-fusion, because the second end-cap-end here is located inside the ferrule.

However, since the first end-cap-end is outside the ferrule after attachment, the AR-coating or the AR-treatment may in principle and in an embodiment be applied or performed on the first end-cap-end after the end-cap is attached by arc-fusion inside the ferrule. In this manner, and for example if the first end-cap-end is close to the fusion points, the attachment of the end-cap by arc-fusion may damage the first end-cap-end, thereby for example affect the transmission through first the end-cap-end. This can however be tolerated when no AR-coating has been applied or no AR-treatment has performed on the first end-cap-end. Accordingly, in this embodiment, the first end-cap-end may be prepared for AR-coating or AR-treatment after attachment, such as being polished and/or being flattened to form an optical window or being curved to form an optical focusing surface.

In a second embodiment of the method according to the fourth aspect, a transition from the first end-cap part to the second end-cap-part is made by tapering.

In a related embodiment the tapering is a two-step process:
- a first step comprising tapering the first end-cap-part from a first outer diameter to an intermediate end-cap-part having an intermediate outer diameter; and
- a second step comprising tapering the intermediate end-cap-part from the intermediate outer diameter to the second end-cap part having a second outer diameter.

In one embodiment, the first ferrule-end and/or the second ferrule-end is/are provided by cleaving.

In most embodiments, the end-cap assembly is the end-cap assembly according to the first aspect.

### Fifth aspect: A method for manufacturing an end-cap-to-fiber assembly for a hollow core optical fiber

In one embodiment of the method according to the fifth aspect, the step of attaching the first fiber-part is performed by arc-fusion, preferably by uniformly creating a fuse around the first fiber-part. The advantages of arc-fusion have already been described in relation to the first and second aspect of the present disclosure.

In another embodiment, the first fiber input-end is provided by cleaving.

In most embodiments, the end-cap-to-fiber assembly is the end-cap to fiber assembly the second aspect.

### Examples

### Example 1 - An embodiment of the end-cap assembly and the end-cap-to-fiber assembly according to the first aspect and the second aspect, respectively

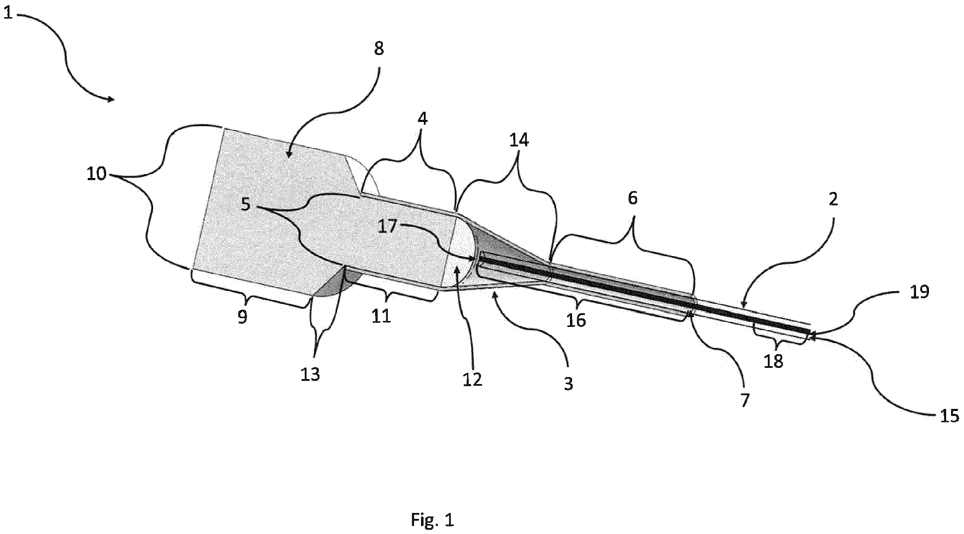

**Fig. 1** shows an embodiment of the end-cap assembly **1** and the end-cap-to-fiber assembly according to the first aspect and the second aspect, respectively. The end-cap assembly is shown as a cut-through view to see the inside of the end-cap assembly. The end-cap assembly **1** for a hollow core optical fiber **2,** comprises an elongated and hollow glass ferrule **3** comprising: a first ferrule-part **4** with a first ferrule-end **5,** and a second ferrule-part **6** with a second ferrule-end **7.** The first ferrule-end **5** is configured to be sealed and the second ferrule-end **7** is configured to receive a hollow core optical fiber **2.** Furthermore, the second ferrule-part **6** is configured to fix the hollow core optical fiber **2.** In this example, the hollow core optical fiber **2** is attached inside the ferrule **3,** more particularly inside the second ferrule-part **6.** The end-cap assembly further comprises an elongated and solid end-cap **8** made of an optically transmissive material comprising: a first end-cap-part **9** with a first end-cap-end **10,** and a second end-cap-part **11** with a second end-cap-end **12.** The second end-cap-part **11** is attached inside the first ferrule-part **4,** whereby the end-cap **8** seals the first ferrule-end **5.**

In this example, the second end-cap-part **11** is attached to the first ferrule-part **4** by arc-fusion, preferably by uniformly creating a fuse around the second end-cap-part **11,** and the hollow core optical fiber **2** is attached to the second ferrule-part **6** by arc-fusion, preferably by uniformly creating a fuse around the hollow core optical fiber **2.** Accordingly, the arc-fusion process provides a uniform fuse between the second end-cap-part **11** and the first ferrule-part **4.** Furthermore, the arc-fusion process provides a uniform fuse between the hollow core optical fiber **2** and the second ferrule-part **6.** These fuses cannot be seen on the figure, but they may be seen in real life by inspection of an end-cap assembly **1** as here disclosed as produced by arc-fusion.

In this example, the second end-cap-part **11** has a length around 2 mm. As can also be seen from **Fig. 1****,** the first end-cap part **9** is outside said ferrule **3,** and the first end-cap-part **9** has a length of around 3 mm.

The first end-cap-part **9** is cylindrical and has a first outer diameter of around 2 mm. The second end-cap-part **11** is also cylindrical and has a second outer diameter of around 1 mm. Accordingly, the first outer diameter is larger than the second outer diameter. The end-cap **3** further comprises a mid-end-cap-part **13** between the first end-cap-part **9** and the second end-cap-part **11,** wherein the mid-end-cap-part **13** is tapered from the first outer diameter to the second outer diameter. The dimensions of the second end-cap-part **11** is configured to match the dimensions of the first ferrule-part **4,** and vice-versa.

In this example, the end-cap **8** is made of fused silica and both the first end-cap-end **10** and the second end-cap-end **12** are anti-reflective treated using a random pattern process. As can also be seen from **Fig. 1****,** the first end-cap-end **10** is a flat surface.

In the shown embodiment of **Fig. 1****,** the first ferrule-part **4** has a length of around 2 mm, and the second ferrule-part **6** has a length of around 5 mm. Furthermore, the first ferrule-part **4** is cylindrical and has a first inner diameter of around 0.216 mm, which is matched to the outer diameter of the hollow core optical fiber **2.** The first inner diameter is larger than the second inner diameter.

The ferrule **3** further comprises a mid-end-ferrule-part **14** between the first ferrule-part **4** and the second ferrule-part **6.** The mid-ferrule-part **14** is tapered from the first inner diameter to the second inner diameter.

Since the hollow-core optical fiber **2** is attached inside the second ferrule-part **6,** the figure also shows an embodiment of the second aspect. Accordingly, **Fig. 1** shows an end-cap-to-fiber assembly **1** comprising the end-cap assembly according to the firs aspect, and the hollow core optical fiber **2** comprising a cladding **15,** wherein said fiber **2** comprises a first fiber-part **16** having a fiber input-end **17** or a fiber output-end **17,** and a second fiber-part **18** having a fiber output-end **19** or a fiber input-end **19.** As can be seen from **Fig. 1****,** the first fiber-part **16** is fixed inside the second ferrule-part **6** in a manner, where the fiber **2** is physically separated from the end-cap **8.** Finally, the second fiber-part **18** is outside the second ferrule-part **6.**

### Example 2 - An embodiment of the ferrule as part of the first aspect and the second aspect

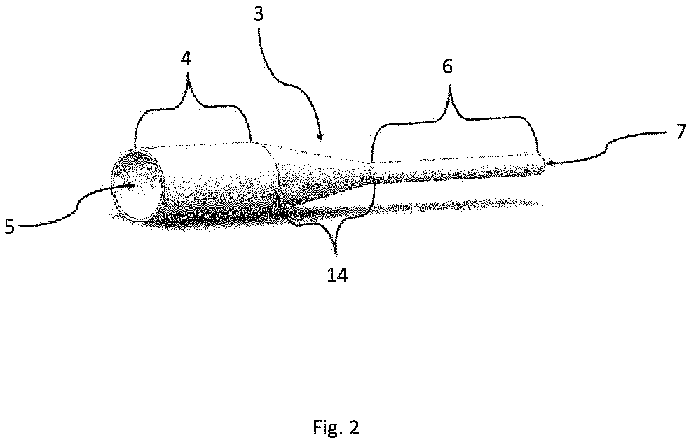

**Fig. 2** shows an embodiment of the ferrule **3,** without the end-cap **1,** as part of the first aspect and the second aspect. The ferrule **3** is shown from a perspective. The ferrule is according to the first and second aspect an elongated and hollow glass ferrule **3.** The ferrule comprises a first ferrule-part **4** with a first ferrule-end **5,** and a second ferrule-part **6** with a second ferrule-end 7. Both the first ferrule-end **5** and the second ferrule end are configured to be sealed.

### Example 3 - An embodiment of the end-cap assembly and the end-cap-to-fiber assembly according to the first aspect and the second aspect, respectively

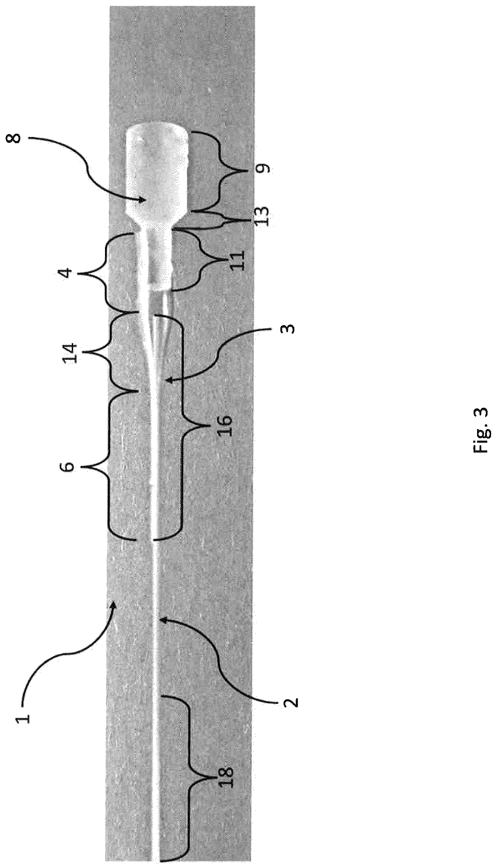

**Fig. 3** shows an embodiment of the end-cap assembly **1** and the end-cap-to-fiber assembly according to the first aspect and the second aspect, respectively. The end-cap assembly as shown is a photo of a manufactured end-cap assembly according to the first and second aspect, which have been manufactured according to the fourth and fifth aspect, respectively.

The end-cap assembly **1** for a hollow core optical fiber **2,** comprises an elongated and hollow glass ferrule **3** comprising: a first ferrule-part **4** with a first ferrule-end **5,** and a second ferrule-part **6** with a second ferrule-end **7.** The first ferrule-end **5** is configured to be sealed and the second ferrule-end **7** is configured to receive a hollow core optical fiber **2.** Furthermore, the second ferrule-part **6** is configured to fix the hollow core optical fiber **2.** In this example, the hollow core optical fiber **2** is attached inside the ferrule **3,** more particularly inside the second ferrule-part **6.** The end-cap assembly further comprises an elongated and solid end-cap **8** made of an optically transmissive material comprising a first end-cap-part **9** with a first end-cap-end **10,** and a second end-cap-part **11** with a second end-cap-end **12.** The second end-cap-part **11** is attached inside the first ferrule-part **4,** whereby the end-cap **8** seals the first ferrule-end **5.**

In this example, the second end-cap-part **11** is attached to the first ferrule-part **4** by arc-fusion, preferably by uniformly creating a fuse around the second end-cap-part **11,** and the hollow core optical fiber **2** is attached to the second ferrule-part **6** by arc-fusion, preferably by uniformly creating a fuse around the hollow core optical fiber **2.** Accordingly, the arc-fusion process provides a uniform fuse between the second end-cap-part **11** and the first ferrule-part **4.** Furthermore, the arc-fusion process provides a uniform fuse between the hollow core optical fiber **2** and the second ferrule-part **6.** These fuses cannot be seen on the figure, but they may be seen in real life by inspection of an end-cap assembly **1** as here disclosed as produced by arc-fusion.

In this example, the second end-cap-part **11** has a length around 3 mm. As can also be seen from **Fig. 3****,** the first end-cap part **9** is outside said ferrule **3,** and the first end-cap-part **9** has a length of around 3 mm.

The first end-cap-part **9** is cylindrical and has a first outer diameter of around 2 mm. The second end-cap-part **11** is also cylindrical and has a second outer diameter of around 1 mm. Accordingly, the first outer diameter is larger than the second outer diameter. The end-cap **3** further comprises a mid-end-cap-part **13** between the first end-cap-part **9** and the second end-cap-part **11,** wherein the mid-end-cap-part **13** is tapered from the first outer diameter to the second outer diameter. The dimensions of the second end-cap-part **11** is configured to match the dimensions of the first ferrule-part **4,** and vice-versa.

In this example, the end-cap **8** is made of fused silica and both the first end-cap-end **10** and the second end-cap-end **12** are anti-reflective treated using a random pattern process. As can also be seen from **Fig. 3****,** the first end-cap-end **10** is a flat surface.

In the shown embodiment of **Fig. 3****,** the first ferrule-part **4** has a length of around 3 mm, and the second ferrule-part **6** has a length of around 5 mm. Furthermore, the first ferrule-part **4** is cylindrical and has a first inner diameter of around 0.216 mm, which is matched to the outer diameter of the hollow core optical fiber **2.** The first inner diameter is larger than the second inner diameter.

The ferrule **3** further comprises a mid-end-ferrule-part **14** between the first ferrule-part **4** and the second ferrule-part **6.** The mid-ferrule-part **14** is tapered from the first inner diameter to the second inner diameter.

Since the hollow-core optical fiber **2** is attached inside the second ferrule-part **6,** the figure also shows an embodiment of the second aspect. Accordingly, **Fig. 3** shows an end-cap-to-fiber assembly **1** comprising the end-cap assembly **1** according to the first aspect, and the hollow core optical fiber **2** comprising a cladding **15,** wherein said fiber **2** comprises a first fiber-part **16** having a fiber input-end **17** or a fiber output-end **17,** and a second fiber-part **18** having a fiber output-end **19** or a fiber input-end **19.** As can be seen from **Fig. 1****,** the first fiber-part **16** is fixed inside the second ferrule-part **6** in a manner, where the fiber **2** is physically separated from the end-cap **8.** Finally, the second fiber-part **18** is outside the second ferrule-part **6.**

### Example 4 - An embodiment of the system for coupling an optical beam into and/or out from a hollow core optical fiber according to the third aspect

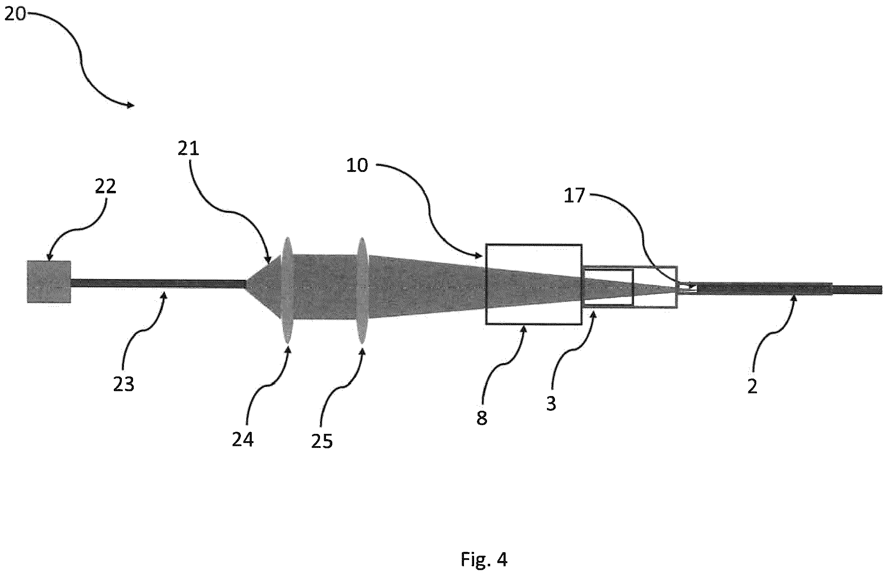

**Fig. 4** shows an embodiment of the system **20** for coupling an optical beam **21** into and/or out from a hollow core optical fiber **2** according to the third aspect. In this example, the system **20** comprises the end-cap-to-fiber assembly **1,** according to the first aspect, and the hollow core optical fiber **2,** as attached inside the ferrule **3,** thus also the end-cap-to-fiber assembly according to the second aspect, and a laser **22** configured to generate the optical beam **21.**

The optical beam **21** is directed into the first end-cap-end **10** and into to the fiber input-end **17,** whereby the optical beam is coupled into the hollow core optical fiber **2.**

From the laser, laser light is first coupled into a large-mode-area (LMA) fiber **23,** wherefrom it is coupled out (in the form of the optical beam, here being diverging), and further into coupling optics, in this example in the form of a collimating lens **24,** and a focusing lens **25** that together with the end-cap **8** is configured to couple the optical beam into the fiber input-end **17.** Accordingly, in this example is show how the present disclosure provides a setup for coupling light from an LMA fiber **23** and into a hollow-core optical fiber **2.**

Further details are described by the following items.

### Items:

1. An end-cap assembly for a hollow core optical fiber, comprising:
   - an elongated and hollow glass ferrule comprising:
      ∘ a first ferrule-part with a first ferrule-end,
      ∘ and a second ferrule-part with a second ferrule-end,

      wherein the first ferrule-end is configured to be sealed, and
      wherein the second ferrule-end is configured to receive a hollow core optical fiber, and
      wherein the second ferrule-part is configured to fix the hollow core optical fiber; and
   - an elongated and solid end-cap made of an optically transmissive material comprising:
      ∘ a first end-cap-part with a first end-cap-end, and
      ∘ a second end-cap-part with a second end-cap-end,
      wherein the second end-cap-part is attached inside the first ferrule-part, whereby the end-cap seals the first ferrule-end.
2. The end-cap assembly according to item 1, wherein the second end-cap-part is attached to the first ferrule-part by arc-fusion, preferably by uniformly creating a fuse around the second end-cap-part, and/or wherein the hollow core optical fiber is attached to the second ferrule-part by arc-fusion, preferably by uniformly creating a fuse around the hollow core optical fiber.
3. The end-cap assembly according to any of the preceding items, wherein the second end-cap-part has a length of more than 1 mm, preferably around 2 mm.
4. The end-cap assembly according to any of the preceding items, wherein first end-cap part is outside said ferrule, and wherein the first end-cap-part has a length of more than 2 mm, preferably around 3 mm.
5. The end-cap assembly according to any of the preceding items, wherein the first end-cap-part is cylindrical and has a first outer diameter of more than 1 mm, preferably around 2 mm.
6. The end-cap assembly according to any of the preceding items, wherein the second end-cap-part is cylindrical and has a second outer diameter of less than 2 mm, preferably around 1 mm.
7. The end-cap assembly according to any of the preceding items, wherein the second end-cap-part is cylindrical and has a second outer diameter of more than 0.4 mm, preferably around 1 mm.
8. The end-cap assembly according to any of the preceding items, wherein the first end-cap-part is cylindrical and has a first outer diameter, and wherein the second end-cap-part is cylindrical and has a second outer diameter, wherein the first outer diameter is larger than the second outer diameter.
9. The end-cap assembly according to item 8, wherein said end-cap further comprises a mid-end-cap-part between the first end-cap-part and the second end-cap-part, wherein the mid-end-cap-part is tapered from the first outer diameter to the second outer diameter.
10. The end-cap assembly according to any of the preceding items, wherein the dimensions of the second end-cap-part is configured to match the dimensions of the first ferrule-part.
11. The end-cap assembly according to any of the preceding items, wherein said end-cap is made of fused silica.
12. The end-cap assembly according to any of the preceding items, wherein the first end-cap-end and/or the second end-cap-end is/are anti-reflective coated, preferably by a dielectric coating.
13. The end-cap assembly according to any of the preceding items, wherein the first end-cap-end and/or the second end-cap-end is/are anti-reflective treated, preferably by a random pattern process.
13. The end-cap assembly according to any of the preceding items, wherein the first end-cap-end is a flat surface.
14. The end-cap assembly according to any of the preceding items, wherein the first end-cap-end is a curved surface to form a lens with a focal point inside the second ferrule-part.
15. The end-cap assembly according to any of the preceding items, wherein said ferrule is made of a material that is different from fused silica, and wherein the material has a refractive index defined at a wavelength of 1064 nm and a temperature of 20 degrees Celsius) that is lower than that of fused silica.
16. The end-cap assembly according to any of the preceding items, wherein said ferrule is made of a material that is different from fused silica, and wherein the material has a coefficient of thermal expansion (CTE) that differs by a factor of 0.3 or more and less than 8.0 than that of fused silica, preferably where the factor is in the range from around 0.5-6.0, more preferably where the factor is in the range from around 0.5-1.5. (In the description, describe that fused silica has a high working/softening temperature that can cause damage to the structure of the HC fiber)
17. The end-cap assembly according to item 16, wherein the material is Borosilicate.
18. The end-cap assembly according to one or more of the items 15-16, wherein the material is Fluorine doped fused Silica (Fluorosilicate).
19. The end-cap assembly according to any of the preceding items, wherein the first ferrule-part has a length of more than 1 mm, preferably around 2 mm.
20. The end-cap assembly according to any of the preceding items, wherein the second ferrule-part has a length of more than 3 mm, preferably around 4 mm, more preferably around 5 mm.
21. The end-cap assembly according to any of the preceding items, wherein the first ferrule-part is cylindrical and has a first inner diameter of more than 0.4 mm and/or less than 2 mm, preferably less than 1 mm.
22. The end-cap assembly according to any of the preceding items, wherein the second ferrule-part is cylindrical and has a second inner diameter of more than 0.2 mm and/or less than 0.4 mm, preferably less than 0.3 mm, most preferably around 0.216 mm.
23. The end-cap assembly according to any of the preceding items, wherein the first ferrule-part is cylindrical inside and has a first inner diameter, and wherein the second end-cap-part is cylindrical inside and has a second inner diameter, wherein the first inner diameter is larger than the second inner diameter.
24. The end-cap assembly according to item 23, wherein said ferrule further comprises a mid-end-ferrule-part between the first ferrule-part and the second ferrule-part, wherein the mid-ferrule-part is tapered from the first inner diameter to the second inner diameter.
25. The end-cap assembly according to any of the preceding items, wherein the dimensions of the first ferrule-part are configured to match the dimensions of the second end-cap-part.
26. The end-cap assembly according to any of the preceding items, wherein the end-cap assembly is for coupling an optical beam into the hollow core optical fiber, and wherein the first end-cap-end is configured to receive an optical beam, such that when the optical beam is incident on the first end-cap-end, the optical beam is transmitted through said end-cap and into the second ferrule-part.
27. The end cap-assembly according to any of the preceding items, wherein the end-cap assembly is for coupling an optical beam out of the hollow core optical fiber.
28. An end-cap-to-fiber assembly comprising:
   - the end-cap assembly according to any of the preceding items,
   - the hollow core optical fiber comprising a cladding,
   wherein said fiber comprises:
   a first fiber-part having a fiber input-end or a fiber output-end, and a second fiber-part having a fiber output-end or a fiber input-end, wherein the first fiber-part is fixed inside the second ferrule-part, whereby said fiber is physically separated from said end-cap, and wherein the second part is outside the second ferrule-part.
29. The end-cap-to-fiber assembly according to item 28, wherein the first fiber-part is fixed by arc-fusion, preferably by uniformly creating a fuse around the hollow core optical fiber.
30. The end-cap-to-fiber assembly according to any of the items 28-29, wherein said fiber further comprises a mid fiber-part between the first fiber-part and the second fiber-part, wherein the mid fiber-part is stripped from the cladding.
31. The end-cap-to-fiber assembly according to items 30, wherein the mid fiber-part is outside the second ferrule-part, whereby the mid-fiber-part is configured to guide light out of said fiber.
32. A system for coupling an optical beam into and/or out from a hollow core optical fiber, comprising:
   - the end-cap-to-fiber assembly according to any of the items 28-31;
   - a laser configured to generate the optical beam,
      wherein the optical beam is directed into the first end-cap-end and into to the fiber input-end, whereby the optical beam is coupled into the hollow core optical fiber, and/or
      wherein the optical beam is directed out from the first end-cap-end and out from the fiber output-end, whereby the optical beam is coupled out from the hollow core optical fiber.
33. The system according to item 32, wherein the laser is a high-power laser having an average power of more than 200 W, preferably more than 1000 W, more preferably more than 1500 W, most preferably more than 2000 W.
34. A method for manufacturing an end-cap assembly for a hollow core optical fiber, comprising the steps of:
   - providing an elongated and hollow glass ferrule comprising:
      ∘ a first ferrule-part with a first ferrule-end,
      ∘ and a second ferrule-part with a second ferrule-end,
   - providing an elongated and solid end-cap made of an optically transmissive material comprising:
      ∘ a first end-cap-part with a first end-cap-end, and
      ∘ a second end-cap-part with a second end-cap-end; and
   - inserting and attaching the second end-cap part inside the first ferrule-part.
35. The method according to item 34, wherein the step of attaching the second end-cap part is performed by arc-fusion, preferably by uniformly creating a fuse around the second end-cap-part.
36. The method according to any of the items 34-35, wherein a transition from the first end-cap part to the second end-cap-part is made by tapering.
37. The method according to item 36, wherein the tapering is a two-step process:
   - a first step comprising tapering the first end-cap-part from a first outer diameter to an intermediate end-cap-part having an intermediate outer diameter; and
   - a second step comprising tapering the intermediate end-cap-part from the intermediate outer diameter to the second end-cap part having a second outer diameter.
38. The method according to any of the items 34-37, wherein the first ferrule-end and/or the second ferrule-end is/are provided by cleaving.
39. The method according to any of the items 34-37, wherein the end-cap assembly is the end-cap assembly according to any of the items 1-27.
40. A method for manufacturing an end-cap-to-fiber assembly for a hollow core optical fiber, comprising the steps of:
   - manufacturing the end-cap assembly according to any of the items 34-39;
      providing a hollow core optical fiber comprising:
      ∘ a first fiber-part having a fiber input-end, and
      ∘ a second fiber-part having a fiber output-end; and
   - inserting and attaching the first fiber-part inside the second ferrule-part.
41. The method according to item 40, wherein the step of attaching the first fiber-part is performed by arc-fusion, preferably by uniformly creating a fuse around the first fiber-part.
42. The method according to any of the items 40-41, wherein the first fiber input-end is provided by cleaving.
43. The method according to any of the items 40-42, wherein the end-cap-to-fiber assembly is the end-cap to fiber assembly according to any of the items 28-31.

## Claims

1. An end-cap assembly for a hollow core optical fiber, comprising:
- an elongated and hollow glass ferrule comprising:
∘ a first ferrule-part with a first ferrule-end,
∘ and a second ferrule-part with a second ferrule-end,
wherein the first ferrule-end is configured to be sealed, and
wherein the second ferrule-end is configured to receive a hollow core optical fiber, and
wherein the second ferrule-part is configured to fix the hollow core optical fiber; and
- an elongated and solid end-cap made of an optically transmissive material comprising:
∘ a first end-cap-part with a first end-cap-end, and
∘ a second end-cap-part with a second end-cap-end,
wherein the second end-cap-part is attached inside the first ferrule-part, whereby the end-cap seals the first ferrule-end.

2. The end-cap assembly according to claim 1, wherein the second end-cap-part is attached to the first ferrule-end by arc-fusion, preferably by uniformly creating a fuse around the second end-cap-part, and/or wherein the hollow core optical fiber is attached to the second ferrule-part by arc-fusion, preferably by uniformly creating a fuse around the hollow core optical fiber.

3. The end-cap assembly according to any of the preceding claims, wherein the first end-cap-end and/or the second end-cap-end is/are anti-reflective treated, preferably by a random pattern process.

4. The end-cap assembly according to any of the preceding claims, wherein said ferrule is made of a material that is different from fused silica, and wherein the material has a refractive index defined at a wavelength of 1064 nm and a temperature of 20 degrees Celsius) that is lower than that of fused silica.

5. The end-cap assembly according to any of the preceding claims, wherein said ferrule is made of a material that is different from fused silica, and wherein the material has a coefficient of thermal expansion (CTE) that differs by a factor of 0.3 or more and less than 8.0 than that of fused silica, preferably where the factor is in the range from around 0.5-6.0, more preferably where the factor is in the range from around 0.5-1.5. (In the description, describe that fused silica has a high working/softening temperature that can cause damage to the structure of the HC fiber)

6. The end-cap assembly according to one or more of the claims 5-6, wherein the material is Fluorine doped fused Silica (Fluorosilicate).

7. The end-cap assembly according to any of the preceding claims, wherein the dimensions of the first ferrule-part are configured to match the dimensions of the second end-cap-part.

8. An end-cap-to-fiber assembly comprising:
- the end-cap assembly according to any of the preceding claims,
- the hollow core optical fiber comprising a cladding,
wherein said fiber comprises:
a first fiber-part having a fiber input-end or a fiber output-end, and a second fiber-part having a fiber output-end or a fiber input-end, wherein the first fiber-part is fixed inside the second ferrule-part, whereby said fiber is physically separated from said end-cap, and wherein the second part is outside the second ferrule-part.

9. A system for coupling an optical beam into and/or out from a hollow core optical fiber, comprising:
- the end-cap-to-fiber assembly according to any of the claims 1-7;
- a laser configured to generate the optical beam,
wherein the optical beam is directed into the first end-cap-end and into to the fiber input-end, whereby the optical beam is coupled into the hollow core optical fiber, and/or
wherein the optical beam is directed out from the first end-cap-end and out from the fiber output-end, whereby the optical beam is coupled out from the hollow core optical fiber.

10. The system according to claim 9, wherein the laser is a high-power laser having an average power of more than 200 W, preferably more than 1000 W, more preferably more than 1500 W, most preferably more than 2000 W.

11. A method for manufacturing an end-cap assembly for a hollow core optical fiber, comprising the steps of:
- providing an elongated and hollow glass ferrule comprising:
∘ a first ferrule-part with a first ferrule-end,
∘ and a second ferrule-part with a second ferrule-end,
- providing an elongated and solid end-cap made of an optically transmissive material comprising:
∘ a first end-cap-part with a first end-cap-end, and
∘ a second end-cap-part with a second end-cap-end; and
- inserting and attaching the second end-cap part inside the first ferrule-part.

12. The method according to claim 11, wherein the step of attaching the second end-cap part is performed by arc-fusion, preferably by uniformly creating a fuse around the second end-cap-part.

13. The method according to any of the claims 11-12, wherein the end-cap assembly is the end-cap assembly according to any of the claims 1-7.

14. A method for manufacturing an end-cap-to-fiber assembly for a hollow core optical fiber, comprising the steps of:
- manufacturing the end-cap assembly according to any of the claims 1-7;
providing a hollow core optical fiber comprising:
∘ a first fiber-part having a fiber input-end, and
∘ a second fiber-part having a fiber output-end; and
- inserting and attaching the first fiber-part inside the second ferrule-part.

15. The method according to claim 14, wherein the step of attaching the first fiber-part is performed by arc-fusion, preferably by uniformly creating a fuse around the first fiber-part.
